# EUROPEAN PATENT APPLICATION

(11) **EP 3 756 847 A1**
(43) Date of publication of application: **30.12.2020**
(21) Application number: 19754456.2
(22) Date of filing: 18.02.2019
(51) Int. Cl.: B29C 33/42, B29C 59/02

(54) **MOLD PRODUCTION METHOD, AND MOLDED ARTICLE PRODUCTION METHOD USING SAME**

(30) Priority: 19.02.2018 JP 2018027432; 18.09.2018 JP 2018174162
(71) Applicant: Daicel Corporation, Osaka 530-0011 (JP); Tokyo Institute of Technology, Tokyo 152-8550 (JP); University Public Corporation Osaka, Osaka-shi, Osaka 545-0051 (JP)
(72) Inventor: ISHIKAWA, Shinsuke, Tokyo 108-8230 (JP); FUJIKAWA, Takeshi, Tokyo 108-8230 (JP); ONISHI, Yuki, Tokyo 152-8550 (JP); HIRAI, Yoshihiko, Osaka 599-8531 (JP)
(74) Representative: Grünecker Patent- und Rechtsanwälte PartG mbB
(86) International application number: PCT/JP2019/006929
(87) International publication number: WO 2019/160166

(57) **Abstract**

Provided is a mold production method whereby a UV curable composition can be molded with good precision through optical imprinting. The mold production method of the present invention is a method of producing a mold including an elastic body and used for molding a UV curable composition, and the method includes simulating deformation associated with curing of the UV curable composition using finite element analysis using [1] curing shrinkage of the UV curable composition and [2] deformation of the mold associated with the curing shrinkage, and designing the mold in accordance with a result of the simulation.

## Description

### Technical Field

The present invention relates to a method for producing a mold made from an elastic body used for molding a UV curable composition, and a method for producing a molded article using a mold produced by the aforementioned method. The present application claims the rights of priority of JP 2018-27432 filed in Japan on 19 February 2018, and of JP 2018-174162 filed in Japan on 18 September 2018, the content of which is incorporated herein.

### Background Art

Imprinting is a miniature fabrication technique with which a nano-sized pattern can be transferred with a very simple process. The use of imprinting enables low cost mass production, and thus imprinting is used in a variety of practical applications such as semiconductor devices and optical members.

For example, a micromirror array is an optical member in which numerous three-dimensional shapes of quadrangular prisms and quadrangular pyramids measuring from 100 to 1000 µm on one side are arranged in a grid, and of the four side surfaces of the three-dimensional shape, two adjacent side surfaces are used as orthogonal mirrors, and therefore accurate angles and high planarity (i.e., high surface precision) are required.

Types of imprinting include thermal imprinting for transfer to a thermoplastic composition, and optical imprinting for transfer to a UV curable composition. In a field, in which transfer precision like that of micromirror arrays is required, a change in shape (expansion or shrinkage) when solidifying or curing is required to be small.

Thermoplastic compositions exhibits extremely small change in shape, and therefore thermal imprinting that uses a thermoplastic composition is excellent in terms of transferability. However, such thermal imprinting is problematic in that it takes a long period of time for solidification, and thus work efficiency is poor, and furthermore, a mold made of metal is used, which increases the cost.

On the other hand, UV curable compositions are economical because a mold made of resin such as a mold can be used. In addition, because UV curable compositions have a fast curing property, work efficiency is also favorable. However, the curing shrinkage of UV curable compositions is large, which becomes a problem when a transferred three-dimensional shape requires a high precision. In addition, various compositions have been examined in order to suppress the curing shrinkage of UV curable compositions, but limitations have still existed.

Patent Document 1 discloses that for a mold used to form a wiring pattern by molding a resin using an imprinting method, a reduction in line width due to shrinkage of the resin can be corrected by a specific function.

### Citation List

### Patent Document

Patent Document 1: JP 2012-183692 A

### Summary of Invention

### Technical Problem

However, in Patent Document 1, curving of the side surface of the wiring was not examined, and even if a mold that has been corrected using the function is used, curving occurs on the side surface of the produced wiring pattern, and thus the surface precision is low.

Therefore, an object of the present invention is to provide a method for producing a mold that can be used to mold a UV curable composition with good precision in optical imprinting.

Another object of the present invention is to provide a mold that can reliably produce a molded article with excellent shape precision (in particular, excellent surface precision).

Another object of the present invention is to provide a method for producing a high precision (in particular, excellent surface precision) molded article made from a cured product of a UV curable composition using the mold.

Another object of the present invention is to provide a high precision (in particular, excellent surface precision) molded article made from a cured product of a UV curable composition.

Another object of the present invention is to provide a simulation device that can accurately predict the curing shrinkage of a UV curable composition and deformation of a mold in association with the curing shrinkage.

Another object of the present invention is to provide an apparatus for producing a mold for reliably producing a molded article with excellent shape precision (in particular, excellent surface precision).

Another object of the present invention is to provide an apparatus for producing a molded article, the production apparatus being capable of producing a high precision (in particular, excellent surface precision) molded article formed from a cured product of a UV curable composition.

### Solution to Problem

As a result of diligent research to solve the problems described above, the present inventors discovered that when optical imprint molding is performed using a mold, the mold and the UV curable composition are closely in contact when curing. The present inventors also found that a UV curable composition that fills a mold increases its hardness gradually as the curing reaction progresses, and the UV curable composition finally becomes harder than the mold. Therefore, a mold having elasticity deforms as it conforms to the deformation of the cured product that is closely in contact with to the side walls of the mold. Thus, the deformation of the mold is transferred to the cured product, and thereby the side surfaces of the obtained molded article curve, and surface precision degrades.

To improve the surface precision of the molded article, the present inventors discovered that taking curing shrinkage of the UV curable composition and mold deformation in association the curing shrinkage in advance, designing the mold to compensate for that deformation, using a mold produced in accordance with that design, and molding a UV curable composition with the imprinting method, enable high-precision, efficient, and low-cost production of a molded article of a desired shape that excels in surface precision The present invention was completed based on these findings.

That is, the present invention provides a method for producing a mold which includes an elastic body and is used for molding a UV curable composition, the method including: (a) simulating deformation associated with curing of the UV curable composition by finite element analysis using [1] curing shrinkage of the UV curable composition and [2] deformation of the mold associated with the curing shrinkage; and (b) designing the mold in accordance with a result of the simulation.

The present invention also provides the method for producing a mold, in which, in step (a), the UV curable composition curing shrinkage [1] is assumed as shrinkage associated with cooling of a thermal viscoelastic body, and is modeled using a thermal expansion coefficient of the thermal viscoelastic body and an increase in a viscosity relaxation time associated with cooling.

The present invention also provides the method for producing a mold, in which, in step (a), mold deformation [2] is modeled while assuming the mold as a superelastic body.

The present invention also provides a mold produced by the method for producing a mold described above.

The present invention also provides a method for producing a molded article, the method including: producing a mold by the method for producing a mold described above, molding a UV curable composition using the produced mold, and obtaining a molded article including a cured product of the molded UV curable composition.

The present invention also provides the method of producing a molded article, in which the molded article is a micromirror array.

The present invention also provides a molded article produced by the aforementioned method for producing a molded article.

The present invention also provides a simulation device that simulates deformation associated with curing of a UV curable composition, by finite element analysis using [1] curing shrinkage of the UV curable composition and [2] deformation of the mold associated with the curing shrinkage.

The present invention also provides an apparatus for producing a mold used for molding a UV curable composition, the apparatus being configured to simulate deformation associated with curing of the UV curable composition by finite element analysis using [1] curing shrinkage of the UV curable composition and [2] deformation of the mold associated with the curing shrinkage, and to design and produce the mold in accordance with a result of the simulation.

The present invention also provides an apparatus for producing a molded article, the apparatus being configured to simulate deformation associated with curing of a UV curable composition by finite element analysis using [1] curing shrinkage of the UV curable composition and [2] deformation of a mold associated with the curing shrinkage, to design and produce a mold in accordance with a result of the simulation and to mold the UV curable composition using the produced mold.

### Advantageous Effects of Invention

According to the method for producing a mold of the present invention, mold design, which has been implemented through repeated prototyping and has required a large amount of time and cost in a related art, can be implemented quickly and reliably by predicting deformation through simulation and reflecting necessary corrections in the design, More specifically, an analysis is conducted in which the UV curable composition is considered to be a thermal viscoelastic body, and modeling is implemented with curing and shrinkage (hereinafter, may be referred to as "curing behavior") of the UV curable composition using shrinkage and solidification (hereinafter, may be referred to as "solidification behavior"), respectively, the shrinkage and solidification being due to cooling of the thermal viscoelastic body. Thus, mold deformation that occurs in association with the curing behavior of the UV curable composition including for example, curvature of a side surface, can be quantitatively reproduced, and the shape of the mold can be optimized taking curvature into consideration in advance.

Furthermore, the mold produced by the mold production method of the present invention has a shape that is corrected to cancel out the predicted deformation, and therefore when the mold is used, a molded article that excels in shape precision, and particularly in surface precision, can be efficiently and inexpensively produced.

Therefore, the mold produced by the mold production method of the present invention is suitably used in applications in which fine structures that require high surface precision are produced by optical imprinting, such applications including micromirror arrays and other optical members, semiconductor lithography, polymer MEMS, flat screens, holograms, waveguides, and precision mechanical components.

### Brief Description of Drawings

FIG. 1 is a schematic diagram illustrating viscoelasticity in a shear direction according to a generalized Maxwell model.
FIG. 2 is a view of a generated mesh in an analysis area (total number of nodes: 12434, total number of elements: 7574), FIG. 2-a illustrates a UV curable composition portion, and FIG. 2-b illustrates the UV curable composition portion and a mold portion.
FIG. 3 is a two-dimensional cross-sectional view of a three-dimensional finite element analysis model cut at a plane perpendicular to the y-axis.
FIG. 4 is a diagram illustrating a process of shape change for mold shape optimization.

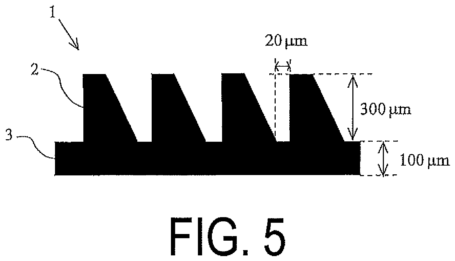

FIG. 5 is a cross-sectional schematic view of a micromirror array.
FIG. 6 is a 3D image of a side surface of a molded article obtained in Experiment Example 1, the 3D image being obtained by observation using a scanning white-light interference microscope. From this image, it is clear that the side surface is curved and displaced.
FIG. 7 is a diagram illustrating the curvature displacement according to finite element analysis of the micromirror side surface after mold release.
FIG. 8 is a diagram illustrating displacement of a molded article produced in Example 1 in the x-direction of a cut surface perpendicular to the y-axis at a time t = 50 s of a Step 2.
FIG. 9 is a diagram illustrating displacement of the molded article obtained in Example 1 in the x-direction of the cut surface perpendicular to the y-axis at a time t = 100 s of the Step 2.
FIG. 10 is a diagram illustrating displacement of a molded article obtained in Example 2 in the x-direction of the cut surface perpendicular to the y-axis at the time t = 100 s of the Step 2.
FIG. 11(a) is a diagram illustrating displacement in a z-axis direction at a cross section perpendicular to the y-axis, FIG. 11(b) illustrates displacement in the y-axis direction at the cross section perpendicular to the y-axis, and FIG. 11(c) is a diagram illustrating displacement in the y-axis direction of the side surface, of a molded article obtained in Example 3 at the time t = 100 s of the Step 2.
FIG. 12(a) is a diagram illustrating displacement in the z-axis direction at a cross section perpendicular to the y-axis, FIG. 12(b) illustrates displacement in the y-axis direction at the cross section perpendicular to the y-axis, and FIG. 12(c) is a diagram illustrating displacement in the y-axis direction of the side surface, of a molded article obtained in Example 4 at the time t = 100 s of the Step 2.
FIG. 13(a) is a diagram illustrating displacement in the z-axis direction at a cross section perpendicular to the y-axis, FIG. 13(b) illustrates displacement in the y-axis direction at the cross section perpendicular to the y-axis, and FIG. 13(c) is a diagram illustrating displacement in the y-axis direction of the side surface, at the time t = 100 s of the Step 2 of the molded article obtained in Example 5.
FIG. 14 is a plot showing a relationship between a time after UV irradiation and a gap change rate, of a UV curable composition of Example 6.
FIG. 15 is a plot showing a relationship between the time after UV irradiation and a storage shear modulus of the UV curable composition of Example 6.
FIG. 16 is a plot showing a relationship between the time after UV irradiation and a loss shear modulus of the UV curable composition of Example 6.
FIG. 17 is a plot showing a relationship between temperature and the coefficient of linear expansion of the UV curable composition of Example 6.
FIG. 18 is a plot showing a storage shear modulus master curve at a reference temperature of the UV curable composition of Example 6.
FIG. 19 is a plot showing a loss shear modulus master curve at the reference temperature of the UV curable composition of Example 6.
FIG. 20 is a plot showing a relationship between a shift factor and temperature of the UV curable composition of Example 6.
FIG. 21 is a plot showing a storage shear modulus master curve represented by a Prony series identified at the reference temperature of the UV curable composition of Example 6.
FIG. 22 is a plot showing a loss shear modulus master curve represented by the Prony series identified at the reference temperature of the UV curable composition of Example 6.
FIG. 23 is a diagram illustrating a curvature displacement distribution of a mirror surface of the UV curable composition of Example 6, the distribution being obtained by analysis results prior to mold shape optimization.
FIG. 24 is a diagram schematically illustrating a physical property measurement experiment of a UV curable composition using a rotary oscillatory rheometer.

### Description of Embodiments

### Mold Production Method

The mold production method of the present invention is a method of producing a mold that is made from an elastic body and used for molding a UV curable composition, and the method includes (a) simulating deformation associated with curing of the UV curable composition by finite element analysis using [1] curing shrinkage of the UV curable composition and [2] deformation of the mold associated with the curing shrinkage, and (b) designing the mold in accordance with a result of the simulation (for example, necessary corrections are made in accordance with the result of the simulation, a die for the mold is designed, and the design is used to produce the mold).

The mold according to the present invention is a mold made from an elastic body. That is, the mold has elasticity and has a property of deforming when subjected to an external force, The material of the mold is not particularly limited as long as it has elasticity, and examples thereof include silicone (for example, polydimethylsiloxane), acrylic polymers, cycloolefin polymers, and fluorine-based polymers.

The curing behavior of [1] when the UV curable composition is irradiated with ultraviolet light can be modeled by, for example, the temperature dependence of the thermal expansion coefficient of a thermal viscoelastic body (for example, a thermoplastic resin), and the increase in the viscosity relaxation time associated with cooling.

The deformation of the mold of [2] can be modeled, for example, by a superelastic body (for example, a neo-Hookean elastic body).

In this analysis, a rectangular parallelepiped form region containing only one three-dimensional pattern is extracted and examined, and the periodic boundary conditions are set on the side surfaces thereof.

A curing reaction of the UV curable composition, which proceeds by UV irradiation, can be modeled by assuming the reaction as a solidification reaction by cooling of the thermal viscoelastic body (for example, cooling from 100°C to 0°C).

Furthermore, when the curing reaction of the UV curable composition proceeds, an increase in the cumulative UV irradiation dose per unit volume can be substituted with a decrease in the temperature of the thermal viscoelastic body.

In addition, the shrinkage of the UV curable composition that is dependent on the cumulative UV irradiation dose can be substituted with the thermal expansion coefficient of the temperature-dependent thermal viscoelastic body.

Furthermore, the thickening of the UV curable composition that is dependent on the cumulative UV irradiation dose can be substituted with an increase in the viscosity relaxation time of the temperature-dependent thermal viscoelastic body.

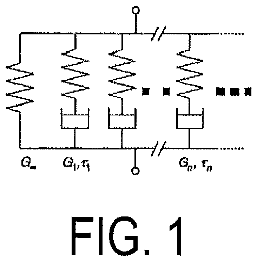

The time dependence of the thermal viscoelastic body can be expressed by a generalized Maxwell model (see FIG. 1). The time-dependent shear modulus of the thermal viscoelastic body based on the generalized Maxwell model is expressed by the following equation. [Equation 1] $\begin{matrix}{g}_{\left(τ\right)} = {g}_{∞} + {\sum }_{i} {g}_{i} exp \left(-\frac{τ}{{τ}_{i}}\right) \\ I = {g}_{∞} + {\sum }_{i} {g}_{i}\end{matrix}$

Note that g_{∞} denotes the long term shear modulus, and gᵢ and τᵢ denote the i^{th} shear modulus and relaxation time, respectively, in FIG. 1.

Note that as expressed by the following equation, the volume elastic modulus K is assumed as a constant not having viscosity. Note that Ko denotes the instantaneous volume elastic modulus, and K_{∞} denotes the long term volume elastic modulus. $K = {K}_{0} = {K}_{∞} .$

Furthermore, the temperature dependence of the thermal viscoelastic body can be expressed by the WLF rule. The WLF rule is a time-temperature superposition rule and is expressed using a shift factor A_{θ} represented by the following equation. Note that θ denotes temperature. Moreover, θ₀, C₁, and C₂ are model parameters of the WLF rule, and in particular, θ₀ denotes the reference temperature. [Equation 2] ${A}_{θ} = exp \left(-\frac{{C}_{1} \left(θ-{θ}_{0}\right)}{{C}_{2} + \left(θ-{θ}_{0}\right)}\right)$

When the glass transition temperature of the material is θ_{g}, θ₀ can be set to around θ_{g} ≤ θ₀ ≤ θ_{g} + 50 (°C). For example, when θ₀ = θ_{g} + 50, C₁ and C₂ can be set to approximately C₁ = 8.86 and C₂ = 101.6, respectively.

Furthermore, when a more detailed simulation is required, the curing behavior of the UV curable composition used in the molded article, caused by irradiation with ultraviolet light, is measured, and the physical property values such as the temperature dependent thermal expansion coefficient, the temperature dependent shift factor, the Prony series coefficients, the instantaneous lateral (or vertical) elastic modulus, and instantaneous Poisson ratio are identified and can be used.

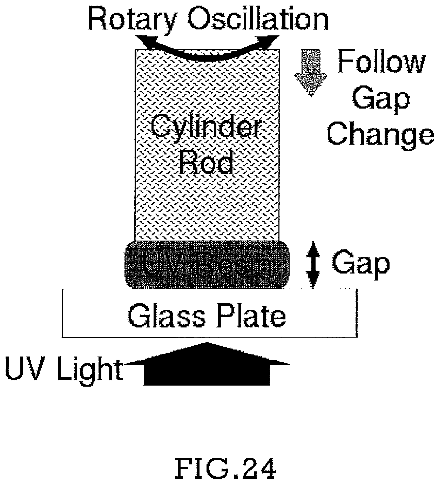

The curing behavior of the UV curable composition can be measured using, for example, a rotational and oscillatory rheometer. More specifically, the UV curable composition is sandwiched in a gap of approximately several hundred microns between a glass plate and a cylinder rod, and a history of lateral viscoelastic properties as a function of time is measured while ultraviolet light is irradiated from the glass plate side, and at the same time, causing the rod to undergo minute rotary oscillation (see FIG. 24). In addition, the history of the shrinkage property of the UV curable composition as a function of time is also measured while the vertical position of the rod tracks the change in the gap due to shrinkage of the UV curable composition. The ultraviolet light irradiation conditions are desirably adjusted to be nearly equivalent conditions to the molding conditions of the molded article and are always maintained at constant values. The physical property values can be determined by varying the frequency of the rotary oscillations and measuring the characteristic values corresponding to the oscillation frequency of each rotary oscillation.

Finite element analysis can be implemented, for example, by the following procedures using, for example, modified quadratic tetrahedron hybrid elements (C3D10MH) in the ABAQUOS/Standard.

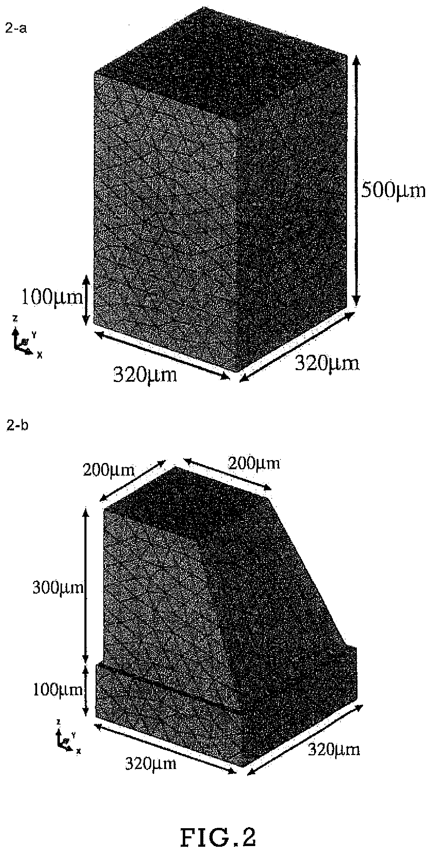

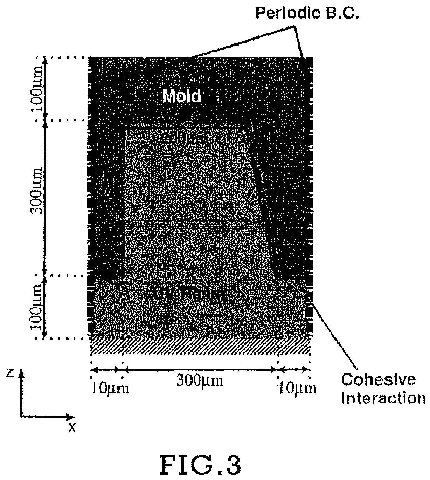

A mesh view of the tetrahedron elements used in the analysis is illustrated in FIG. 2, and a two-dimensional cross-sectional view is illustrated in FIG. 3.

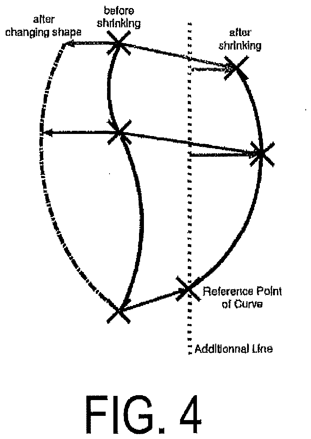

In accordance with the results obtained by the analysis method described above, the mold shape can be optimized by, for example, the following procedures: for example, when one direction on the horizontal plane is defined to be the x-axis, a direction perpendicular to the x-axis in the horizontal plane is defined to be the y-axis, and a direction perpendicular to both the x-axis and the y-axis is defined to be the z-axis, and a quadrangular pyramid-shaped molded article is placed on a horizontal plane and cut by a plane containing the x-axis and the z-axis (FIG.3), the mold shape can be optimized so as to make the left side a straight line parallel to the z-axis (FIG. 4).
1. Obtain, from the analysis results, the x-direction coordinate x⁽ⁱ⁾ of each node i of the left side of the molded article after mold release.
2. Draw an auxiliary line parallel to the y-axis from a reference point of the curve. Calculate the distance in x direction, d⁽ⁱ⁾ (= x⁽ⁱ⁾ - x⁽⁰⁾), for each node i from the auxiliary line, with a sign indicating the direction with respect to the auxiliary line.
3. When the following relationship is satisfied, end the optimization loop. Here, ε denotes the maximum allowable curvature depth. ${d}^{\left(i\right)} < ε ∀ i .$
4. Calculate a modification amount Δx⁽ⁱ⁾ for the mold shape from the following equation. ${Δx}^{\left(i\right)} = - {αd}^{\left(i\right)} \left(0<α<1\right)$
5. Perform a secondary analysis (static analysis for the mold shape change). Apply Δx⁽ⁱ⁾ as the forced displacement in the x-direction to the node i. At this time, displacement is not applied in the y-direction.
6. From the results of the secondary analysis, obtain the coordinates of all of the nodes, and replace and update the initial coordinates of the main analysis with the newly obtained coordinates.

Curing shrinkage of a UV curable composition is a complex phenomenon that includes a phase change, and analysis is difficult. However, according to the mold production method of the present invention, the curing shrinkage is modeled assuming the curing behavior of a UV curable composition as the solidification behavior of a thermal viscoelastic body, and therefore deformation of the UV curable composition can be simulated through finite element analysis. And thus, in accordance with the analysis results, a die for producing a mold is designed, the die obtained based on the design is filled with a liquid molding material for a mold (for example, a silicone resin such as polydimethylsiloxane), and the material is cured, and thereby a mold that can reliably form a molded article with a desired shape can be produced in a very short amount of time compared to a mold in a related art.

### Simulation Device

A simulation device according to an embodiment of the present invention is configured to simulate (or realize a simulation of) deformation associated with curing of the UV curable composition, through finite element analysis using [1] curing shrinkage of the UV curable composition and [2] deformation of the mold associated with the curing shrinkage.

The configuration of the simulation device according to an embodiment of the present invention is not particularly limited as long as the device has a function of simulating through finite element analysis which uses the following: [1] curing shrinkage of the UV curable composition and [2] deformation of the mold associated with the curing shrinkage. The simulation device preferably includes, for example, a computer system as hardware (for example, a CPU, a memory, and a hard disk drive), and as software, an operating system and finite element analysis software (a solver, a pre-processor, and a post-processor).

In a case where the simulation device according to an embodiment of the present invention is used, the curing shrinkage of the UV curable composition, which is a complex phenomenon including a phase transition, and the deformation of the mold associated with the curing shrinkage can be accurately predicted. An accurate prediction of deformation obtained using the simulation device according to an embodiment of the present invention is extremely useful because a molded article of a desired shape can be reliably produced when a mold is produced in accordance with the prediction.

### Mold

A mold according to an embodiment of the present invention is produced by the mold production method described above. With the mold according to an embodiment of the present invention, deformation due to curing shrinkage of the UV curable composition is predicted in advance through simulation, and the simulation results are reflected in the design of the mold. Therefore, when a mold according to an embodiment of the present invention is used, a molded article that is formed from a cured product of a UV curable composition and excels in shape precision (in particular, excellent surface precision) can be reliably produced.

### Mold Production Apparatus

An apparatus for producing a mold according to an embodiment of the present invention is an apparatus for producing a mold that is used for molding a UV curable composition, and is configured to simulate deformation associated with curing of the UV curable composition by finite element analysis using [1] curing shrinkage of the UV curable composition and [2] deformation of the mold associated with the curing shrinkage, and to design and produce the mold in accordance with a result of the simulation.

The configuration of the apparatus for producing a mold according to an embodiment of the present invention is not particularly limited as long as the apparatus has a function of simulating deformation associated with curing of a UV curable composition by finite element analysis using the following: [1] curing shrinkage of the UV curable composition and [2] deformation of the mold associated with the curing shrinkage; and designing and producing a mold in accordance with the result of the simulation (for example, necessary modifications are made in accordance with the result of the simulation, a die for a mold is designed, and the obtained die is used to produce a mold). The apparatus for producing a mold preferably includes, for example, a computer system as hardware (for example, a CPU, a memory, and a hard disk drive), and as software, an operating system and finite element analysis software (a solver, a pre-processor, and a post-processor).

When the apparatus for producing the mold according to an embodiment of the present invention is used, the curing shrinkage of a UV curable composition, which is a complex phenomenon including a phase transition, and the deformation of the mold associated with the curing shrinkage can be accurately predicted, and a mold can be produced in accordance with the prediction, and therefore a mold for which compensation has been made for the deformation can produced. The mold produced in this manner is extremely useful because when used, the mold can reliably produce a molded article with a desired shape.

### Molded Article Production Method

Furthermore, when a UV curable composition is molded using a mold produced by the mold production method described above, a molded article having a desired shape can be reliably produced.

An example of the molded article includes a micromirror array. The micromirror array is an optical member in which numerous stereoscopic patterns such as quadrangular prisms, truncated quadrangular pyramids, and quadrangular pyramids with a height from 10 to 1000 µm are arranged in a grid (for example, arranged in a grid at intervals from 10 to 1000 µm).

The mold for producing the micromirror array preferably has a configuration in which a plurality of concavities having an inverted shape of a quadrangular prism or a quadrangular pyramid are arranged in a grid.

Examples of the method for molding the UV curable composition include the methods (1) and (2) below.
(1) A method including coating the UV curable composition onto a mold, pressing a substrate from above, curing the UV curable composition, and then removing the mold.
(2) A method including pressing a mold onto a UV curable composition coated onto a substrate to mold the UV curable composition, curing the UV curable composition, and then removing the mold

For the substrate above, a substrate having a light transmittance at a wavelength of 400 nm of 90% or greater is preferably used, and a substrate made of quartz or glass can be suitably used. Further, the light transmittance at the wavelength can be determined using a substrate (thickness: 1 mm) as a test piece and using a spectrophotometer to measure the light transmittance at the wavelength irradiated to the test piece.

The method of applying the UV curable composition is not particularly limited, and examples thereof include methods using a dispenser, or a syringe.

The UV curable composition can be cured by irradiating with ultraviolet light. Examples of the light source used during the ultraviolet light irradiation include a high-pressure mercury-vapor lamp, an ultrahigh-pressure mercury-vapor lamp, a carbon-arc lamp, a xenon lamp, and a metal halide lamp. The irradiation time is dependent of the type of the light source, the distance between the light source and the coated surface, and other conditions, but is several tens of seconds at the longest. The illuminance is approximately from 5 to 200 mW. After the ultraviolet light irradiation, the curable composition may be heated (post-curing) as necessary to facilitate curing.

### UV Curable Composition

The UV curable composition according to an embodiment of the present invention includes cationic curable compositions and radical curable compositions. In an embodiment of the present invention, of the compositions, a cationic curable composition is preferable because such composition is not subjected to curing inhibition by oxygen.

A cationic curable composition is a composition that includes a cationic curable compound, and has excellent curability. Above all, a composition containing an epoxy resin as a cationic curable compound is preferable from the perspective of excelling in curability and producing a cured product that exhibits optical characteristics (especially transparency), good hardness and heat resistance.

As the epoxy resin, a well-known or commonly used compound having one or more epoxy groups (oxirane ring) in a molecule can be used, and examples thereof include alicyclic epoxy compounds, aromatic epoxy compounds, and aliphatic epoxy compounds, In an embodiment of the present invention, of these epoxy resins, in terms of being able to form a cured product with excellent heat resistance and transparency, an alicyclic epoxy compound having an alicyclic structure and an epoxy group as a functional group in the molecule is preferable, and a polyfunctional alicyclic epoxy compound is more preferable.

Specific examples of the polyfunctional alicyclic epoxy compound include:
(I) a compound having an epoxy group (namely, an alicyclic epoxy group) configured from two adjacent carbon atoms and an oxygen atom constituting an alicyclic ring,
(II) a compound having an epoxy group directly bonded to an alicyclic ring through a single bond, and
(III) a compound having an alicyclic ring and a glycidyl group.

As the polyfunctional alicyclic epoxy compound, the compound (I) having an alicyclic epoxy group is particularly preferable because curing shrinkage is low, and a cured product that excels in shape precision and optical properties can be produced.

Examples of the abovementioned compound (I) having an alicyclic epoxy group include compounds represented by Formula (1) below.

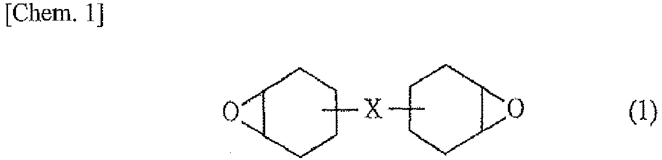

Representative examples of the compound represented by Formula (1) above include 3,4-epoxycyclohexylmethyl(3,4-epoxy)cyclohexane carboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.

The UV curable composition according to an embodiment of the present invention may include another curable compound in addition to the epoxy resin as a curable compound, and may include, for example, one type or more types of cationic curable compounds, such as an oxetane compound and a vinyl ether compound.

The UV curable composition according to an embodiment of the present invention preferably includes an epoxy resin as a curable compound, and in particular, the UV curable composition preferably includes an epoxy resin containing a polyfunctional alicyclic epoxy compound at 50 wt.% or greater (particularly preferably 60 wt.% or greater, and most preferably 70 wt.% or greater) of the total amount of curable compounds.

The UV curable composition preferably includes one or more photopolymerization initiators along with the curable compound. The content of the photopolymerization initiator is, for example, in a range from 0.1 to 5.0 parts by weight per 100 parts by weight of the curable compound (in particular, the cationic curable compound) included in the UV curable composition. When the content of the photopolymerization initiator is less than the above range, curing failures may occur. On the other hand, when the content of the photopolymerization initiator exceeds the above range, coloration of the cured product tends to occur.

The UV curable composition according to an embodiment of the present invention can be produced by mixing the curable compound, the photopolymerization initiator, and other components as necessary (such as a solvent, an antioxidant, a surface conditioner, a photosensitizer, an anti-foaming agent, a leveling agent, a coupling agent, a surfactant, a flame retardant, an ultraviolet absorber, and a colorant). The amount of other components that are blended is, for example, 20 wt.% or less, preferably 10 wt.% or less, and particularly preferably 5 wt.% or less of the total amount of the UV curable composition.

### Molded Article Production Apparatus

An apparatus for producing a molded article according to an embodiment of the present invention is configured to simulate deformation associated with curing of a UV curable composition, by finite element analysis using [1] curing shrinkage of the UV curable composition and [2] deformation of a mold associated with the curing shrinkage, to design and produce a mold in accordance with a result of the simulation, and to mold the UV curable composition using the produced mold.

The configuration of the apparatus for producing a molded article according to an embodiment of the present invention is not particularly limited as long as the apparatus has a function of simulating deformation associated with curing of a UV curable composition, by finite element analysis using [1] curing shrinkage of the UV curable composition and [2] deformation of the mold associated with the curing shrinkage, designing and producing a mold in accordance with the result of the simulation, and molding the UV curable composition. The apparatus for producing the molded article preferably includes a computer system as hardware (for example, a CPU, a memory, and a hard disk drive), and as software, an operating system, and finite element analysis software (a solver, a pre-processor, and a post-processor).

When the apparatus for producing the molded article according to an embodiment of the present invention is used, the curing shrinkage of the UV curable composition, which is a complex phenomenon including a phase transition, and the deformation of the mold associated with the curing shrinkage can be accurately predicted, and a mold produced in accordance with the prediction can be used to mold the UV curable composition, and therefore a molded article of a desired shape can be reliably produced.

### Examples

Hereinafter, the present invention will be described more specifically with reference to examples, but the present invention is not limited by these examples.

### Experiment Example 1

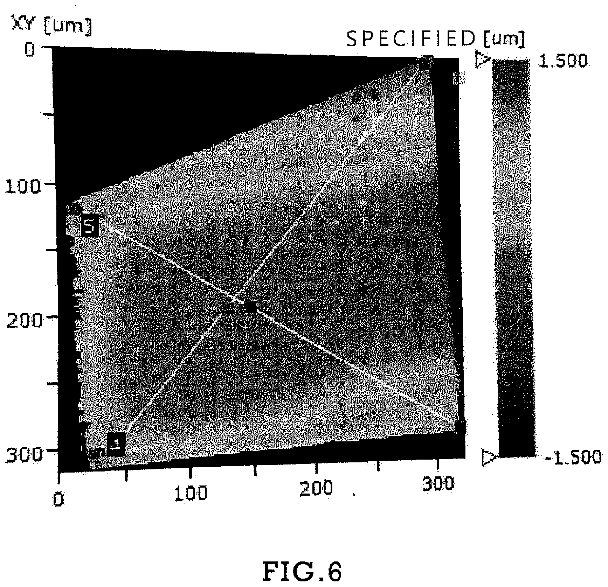

A UV curable composition (trade name "CELVENUS OUH106", containing a cationic curable compound and a photocationic polymerization initiator, with 80 wt.% of a total amount of the cationic curable compound being an epoxy resin (including a polyfunctional alicyclic epoxy compound), available from Daicel Corporation) was coated onto a mold, and the mold was sealed with a transparent substrate from the top. Subsequently, the composition was subjected to UV irradiation (80 mW × 30 seconds), and then the mold was released and a molded article was obtained (FIG. 6). The obtained molded article was curved and had a displacement at the side surface, from a center portion to a center lower portion of the side surface.

### Example 1 (Examination of curvature at the side surface of the molded article, from the center portion to the center lower portion of the side surface)

The model was built in which curing shrinkage caused by irradiation of the UV curable composition with ultraviolet light was assumed as shrinkage solidification by cooling of a thermal viscoelastic body.

### Physical Properties of the Thermal Viscoelastic Body

Linear thermal expansion coefficient: 0.0001 K⁻¹
Instantaneous Young's modulus: 250 MPa
Instantaneous Poisson ratio: 0.3
Generalized Maxwell Model:
g₁ = 0.99999
τ₁ = 1.0 sec.
Time-temperature superposition rule (WLF rule):
θ₀: 25°C
C₁ = 10
C₂: 100°C

Furthermore, the mold was modeled by a neo-Hookean elastic body.

### Physical Properties of the Neo-Hookean Elastic Body

Initial Young's modulus: 5 MPa
Initial Poisson ratio: 0.49

Finite element analysis was performed according to the following procedures using an ABAQUOS/Standard modified quadratic tetrahedron hybrid element (C3D10MH).
<Step 1: Stationary (1 sec)>
   Static analysis
   Initiation of contact without slippage
<Step 2: Solidification shrinkage (100 sec)>
   Quasi-static analysis
   Reduce the temperature of the thermal viscoelastic body from 100°C to 0°C at a rate of 1°C/sec.
<Step 3: Mold release (10 sec)>
   Quasi-static analysis
   Eliminate contact.
   Raise mold 400 µm.

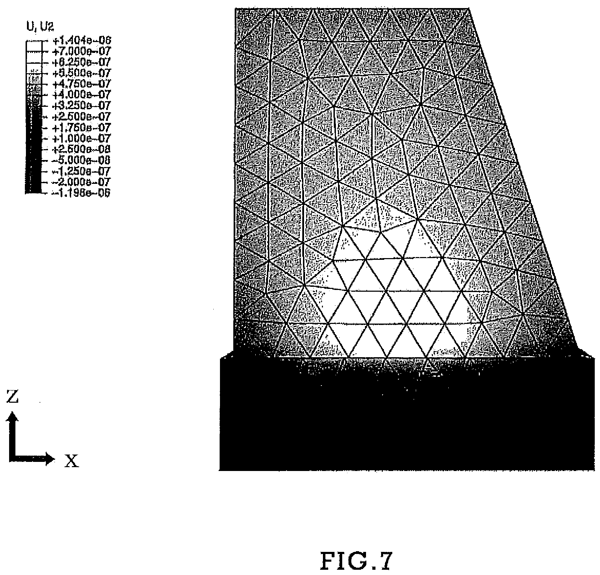

From the cross-sectional view (FIG. 7) of the molded article reproduced by numerical analysis, it was found that the curvature from the center portion to the center lower portion was quantitatively consistent with the results of the above Experiment Example.

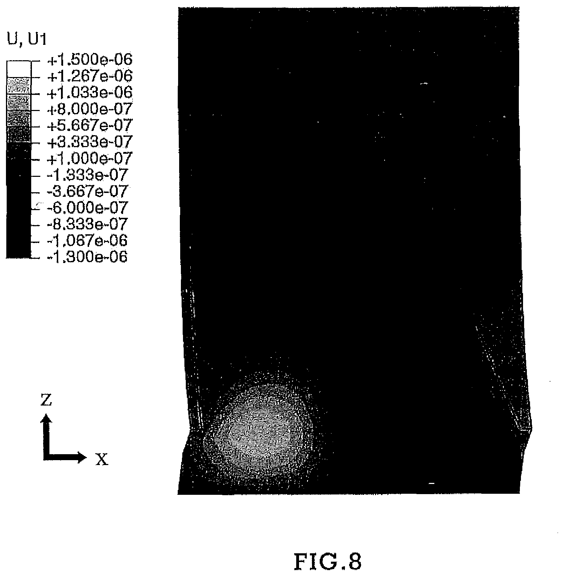

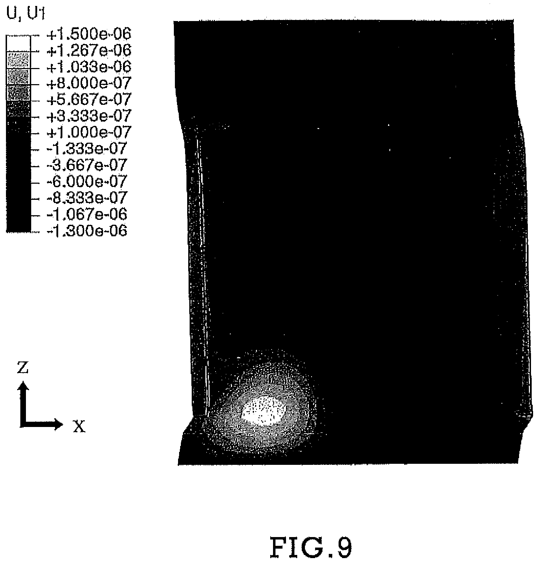

Also, from FIGS. 8 and 9, it was possible to explain quantitatively that the curvature of the center portion and the lower center portion were caused by respectively independent factors. In other words, from FIG. 8, which illustrates displacement in the x-direction at the time t = 50 s of Step 2, it was found that in the first half of Step 2, the resin cured very little, and internal flow associated with shrinkage occurred. Then, the left mold wall surface was contracted toward the center and bent due to adhesive contact. At this time, the right side mold wall surface was also contracted toward the center, and therefore the left and right molds were mutually contracted through the periodic boundary conditions. However, because the mold has an asymmetric shape with regard to the left-right direction, the volume of the resin in the left half was larger, and the shrinkage associated therewith was also large, and therefore the contracting force present in the left side mold became larger, which resulted in bending to the center portion. This was the cause of curvature at the center lower portion of the side surface of the molded article.

On the other hand, from a cross-sectional view (FIG. 9) perpendicular to the y-axis at the time t = 100 s of Step 2, it was clear that bulging was in progress at the center portion of the mold compared to FIG. 8. Shrinkage continued at a constant rate even after the flow has stopped due to curing of the resin, and therefore the mold exhibited "barreling", and thereby the space of the shrinkage portion was filled, and the "barreling" caused the mold center portion to bulge, and the center portion of the side surface of the molded article to curve.

### Example 2

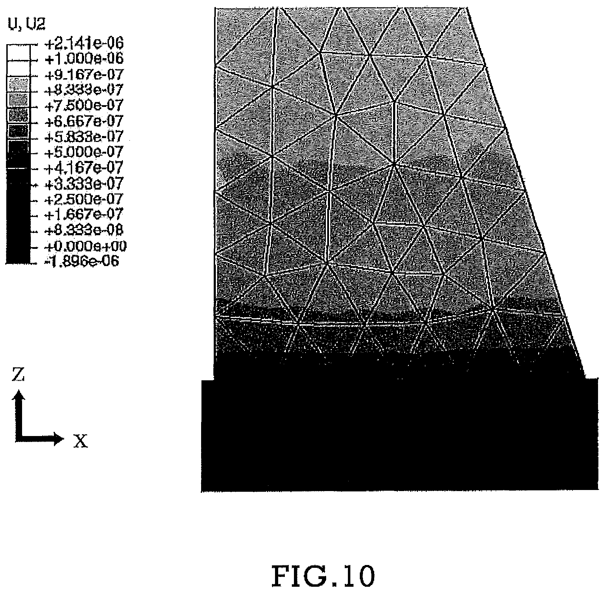

Finite element analysis was performed under the same conditions as in Example 1 with the exception that the initial Young's modulus of the mold was changed to 1000 Gpa. As a result, in a cross-sectional view perpendicular to the y-axis (FIG. 10) at a time t = 100 s of Step 2, curvature was not observed at the center part of the side surface of the molded article.

From this, it was confirmed that barreling caused by the softness of the mold was involved in the development of curvature at the center portion of the side surface of the molded article.

From the results of Examples 1 and 2 and Experiment Example 1, it was confirmed that curing shrinkage of the resin and the resultant deformation of the mold were involved in the development of curvature from the center portion of the side surface to the center lower portion of the molded article. It was also confirmed that deformation of the molded article can be accurately simulated by performing calculations that take into account the curing shrinkage of the resin and the deformation of the mold associated therewith.

### Example 3 (Examination of Residual Film Layer Thickness)

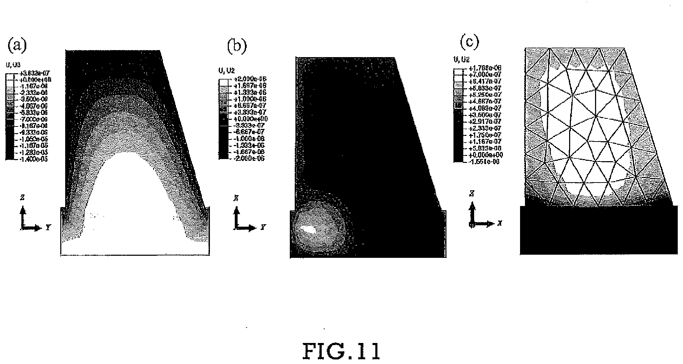

Finite element analysis was performed under the same conditions as in Example 1 with the exception that the thickness of a residual film layer was set to 100 µm. As a result, from a cross-sectional view (FIG. 11) perpendicular to the y-axis at a time t = 100 s of Step 2, conditions were observed in which almost all regions of the residual film layer were involved in flow, and the flow was somewhat limited by interference of a fixed boundary of the bottom surface. In addition, the thickness of the residual film layer was thin, and therefore flow that caused the material drawn into the center portion from both sides was large.

### Example 4 (Examination of Residual Film Layer Thickness)

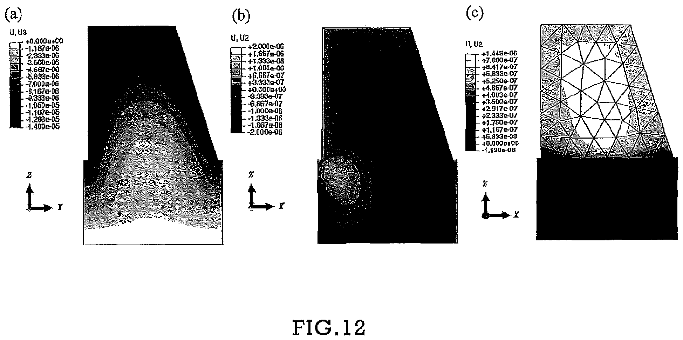

Finite element analysis was performed under the same conditions as in Example 1 with the exception that the thickness of the residual film layer was set to 200 µm. As a result, in a cross-sectional view (FIG. 12) perpendicular to the y-axis at the time t = 100 s of Step 2, the curvature was almost unchanged compared to the case in which the thickness of the residual film layer was 100 µm. The upper portion (100 µm thick portion) of the residual film layer was primarily involved in flow, and the flow rate of the lower portion (100 µm thick portion) was limited.

### Example 5 (Examination of Residual Film Layer Thickness)

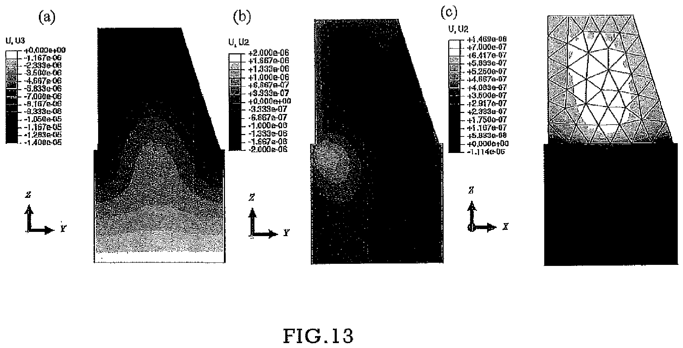

Finite element analysis was performed under the same conditions as in Example 1 with the exception that the thickness of the residual film layer was set to 300 µm. As a result, in a cross-sectional view (FIG. 13) perpendicular to the y-axis at the time t = 100 s of Step 2, the curvature was almost unchanged compared to the case in which the thickness of the residual film layer was 100 µm. The upper portion (100 µm thick portion) of the residual film layer was primarily involved in flow, the flow rate of the center portion (100 µm thick portion) was limited, and the lower portion (100 µm thick portion) exhibited almost no flow.

From the results of Examples 3 to 5, it was confirmed that the thickness of the residual film layer had almost no impact on the transfer precision. More specifically, it was found that when the thickness of the residual film layer was set to be thinner than 100 µm, flow resistance increased, and the curvature might be affected. The thickness of the residual film layer need only be set to 100 µm or thicker, and for example, even if the thickness of the residual film layer was 200 µm or greater, there was no effect of improving transfer precision. Therefore, it was confirmed that the element of residual film layer thickness was not necessarily included to the simulation using finite element analysis.

### Example 6 (Examination using a physical property value identification method by measuring curing behavior)

The curing behavior (gap change rate, storage shear modulus (G'), and loss shear modulus (G")) of the UV curable composition used in Experiment Example 1 (trade name "CELVENUS OUH106", available from Daicel Corporation) was measured at each of the rotary oscillation frequencies (0.1 to 10 Hz) using a rheometer (MCR-301) available from Anton-Paar GmbH.

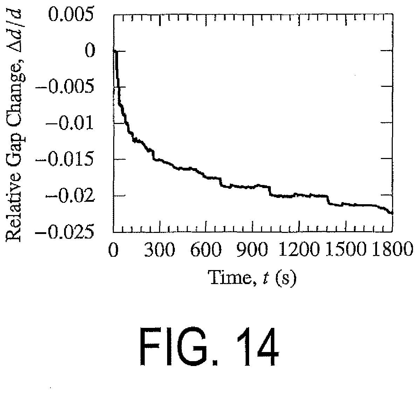

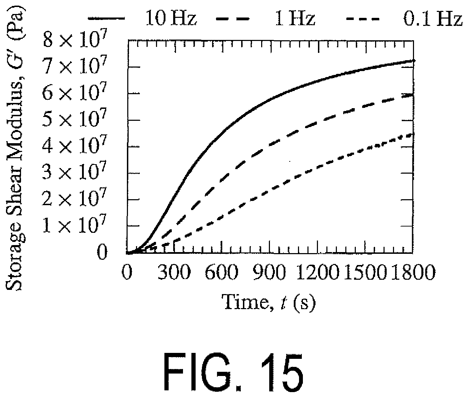

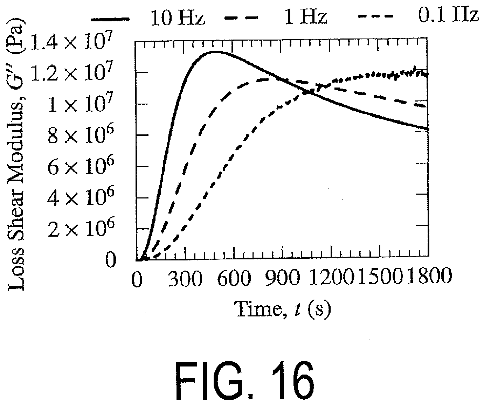

The UV irradiation conditions for measurements were adjusted to be equivalent to that of Experiment Example 1 (80 mW × 30 sec). The UV irradiation conditions were always constant, and the gap change rate was independent of the oscillation frequency. Representative results of the gap change rate are illustrated in FIG. 14. On the other hand, the results for the lateral elastic modulus differed at each oscillation frequency, and therefore results for three representative conditions (10 Hz, 1 Hz, and 0.1 Hz) are shown in FIGS. 15 and 16. Shrinkage and curing of the UV curable composition used in these measurements continued to proceed even after UV irradiation for 30 seconds, indicating that dark curing was in progress.

In the model, the curing reaction that proceeded through UV irradiation of the UV curable composition is substituted with a solidification reaction through cooling of a thermal viscoelastic body (for example, cooling from 100°C to 0°C), and therefore prior to identifying the physical property values, the temperature must be set as a gauge for the reaction progress. Here, the history of the temperature as a function of time was set to θ(t) = -t. Note that the "temperature" set here was a virtual value that was not related to the actual temperature.

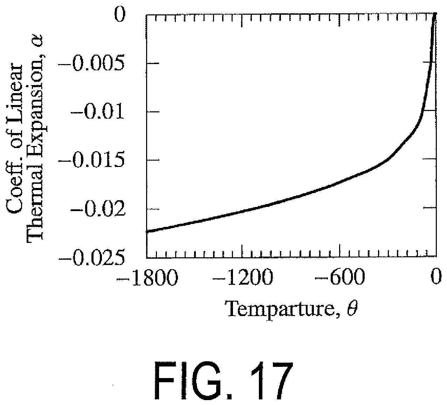

The temperature-dependent thermal expansion coefficient was determined from the history of the gap change rate as a function of time obtained by measurements. Note that the coefficient of volume expansion β was three times the coefficient of linear expansion a, and when the temperature-dependent linear expansion coefficient α(θ) was determined from FIG. 14 using the initial state as a reference, the graph of FIG. 17 was obtained as table data.

The history of the measured lateral elastic modulus as a function of time was used to identify the shift factor of the time-temperature superposition rule. The temperature-dependent shift factor A(θ) was determined by defining the reference temperature θ^{ref}, and then determining the shift factor at various sample temperatures at which the master curves of G'(ω) and G"(ω) (ω: angular frequency) were smooth functions.

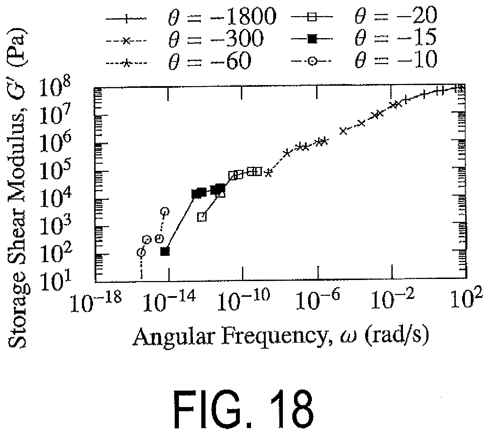

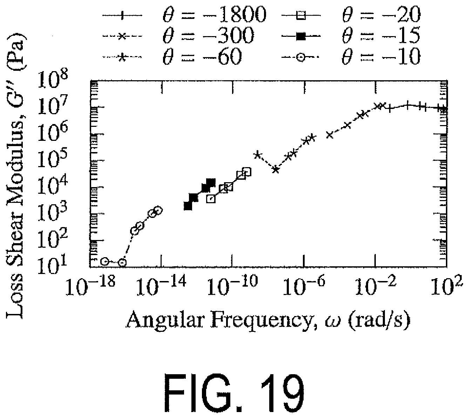

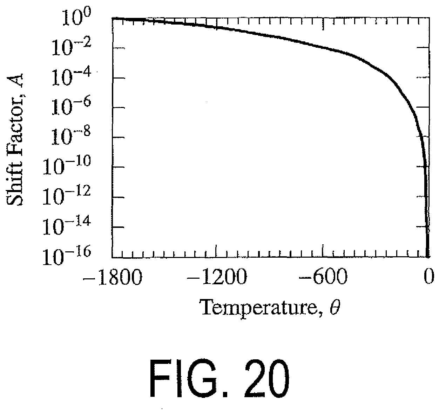

Note that in the present examples, rather than using the WLF rule or the like in the time-temperature superposition, the conversion was performed using table data that can be more widely applied. The master curves of G'(ω) and G"(ω) were obtained by using a reference temperature of θ^{ref} = -1800 and by shifting based on FIGS. 15 and 16. The master curves of G'(ω) and G"(ω) are shown in FIGS. 18 and 19. To facilitate reading of the graphs, only data at six sample temperatures is presented. When the defined shift factor was plotted as a function A(θ) of temperature, FIG. 20 was obtained.

Furthermore, the coefficients of the Prony series were identified using the obtained master curve. As with many thermal viscoelastic bodies, it is assumed that the volume elastic modulus did not have viscosity, and only the lateral elastic modulus has viscosity. The UV curable composition undergoes a phase change from a fluid to a solid. Therefore, it was necessary to identify the coefficients of Prony series over a wide range of time constants in order to accurately reproduce the deformation behavior of the UV curable composition. The instantaneous lateral elastic modulus and the instantaneous Poisson ratio, etc, were determined by conducting material tests on a bulk test piece after being fully cured. On the other hand, the long-term lateral elastic modulus was a physical property value that was difficult to determine empirically. Therefore, the behavior that was as close as possible to the fluid was reproduced by setting, as the long-term lateral elastic modulus, a value (for example, a value of the instantaneous lateral elastic modulus about × 10⁻⁶) that could be regarded as being sufficiently small compared to the measurement range with the rheometer .

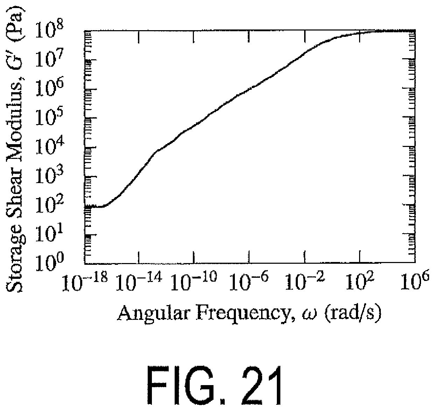

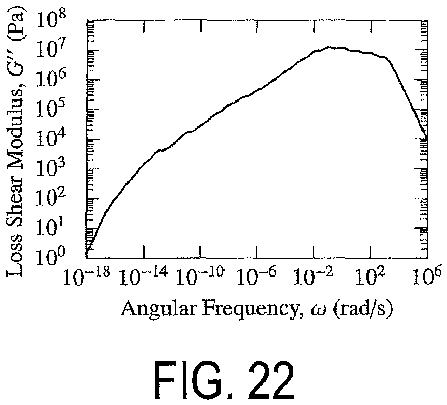

The master curves of G'(ω) and G"(ω) at the reference temperature θ^{ref} = -1800, obtained by identifying the coefficients of the Prony series for FIGS. 18 and 19, are shown in FIGS. 21 and 22. Twenty terms of 10⁻³, 10⁻²,... 10¹⁶ (s) were used for the time constant τ of the Prony series.

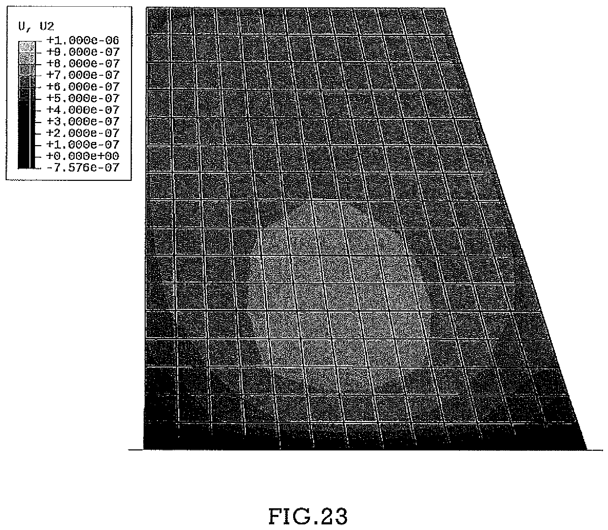

The physical property values thus obtained (the temperature-dependent thermal expansion coefficient, temperature-dependent shift factor, Prony series coefficients, instantaneous lateral (or vertical) elastic modulus, and instantaneous Poisson ratio) were used as the material physical properties of the UV curable composition, and the change in temperature (θ(t) = -t) as a function of time was applied as a region condition, and thereby a numerical analysis could be implemented. Furthermore, the physical property value data of the mold was set to the same data as that of Example 1, and finite element analysis was performed. From the cross-sectional view (FIG. 23) of the molded article reproduced by numerical analysis, it was found that the curvature from the center portion to the center lower portion was quantitatively consistent with the results of the above Experiment Example.

From the above results, it is clear that according to the method of the present invention, the curing shrinkage of the UV curable composition and the mold deformation in association with the curing shrinkage can be predicted through simulation. Therefore, when the method of the present invention is used, the necessary corrections can be determined through calculations, and when the corrections determined through calculations are reflected in the design, a mold that can be used to more quickly, reliably, and inexpensively produce a high precision molded article can be obtained. Furthermore, using this mold, a high precision molded article can be efficiently obtained.

### Industrial Applicability

According to the method for producing a mold of the present invention, mold design, which has been implemented through repeated prototyping and has required a large amount of time and cost in a related art, can be implemented quickly and reliably by predicting deformation through simulation, and reflecting necessary corrections in the design.

Furthermore, the mold obtained by the method described above has a shape that is corrected to cancel out the predicted deformation, and therefore if the mold is used, a molded article that excels in shape precision can be efficiently and inexpensively obtained. Therefore, the mold obtained by the method described above can be suitably used in applications to produce, through optical imprinting, fine structures that require high surface precision such as micromirror arrays.

### Reference Signs List

1 Micromirror array
2 Stereoscopic pattern
3 Residual film layer

## Claims

1. A method for producing a mold, the mold comprising an elastic body and being used for molding a UV curable composition, the method comprising:
(a) simulating deformation associated with curing of the UV curable composition by finite element analysis using:
[1] curing shrinkage of the UV curable composition; and
[2] deformation of the mold associated with the curing shrinkage; and
(b) designing the mold in accordance with a result of the simulation.

2. The method for producing a mold according to claim 1, wherein, in step (a), the UV curable composition curing shrinkage [1] is assumed as shrinkage associated with cooling of a thermal viscoelastic body and is modeled using:
a thermal expansion coefficient of the thermal viscoelastic body; and
an increase in a viscosity relaxation time associated with cooling.

3. The method according to claim 1 or 2,
wherein, in step (a), the mold deformation [2] is modeled while assuming the mold as a superelastic body.

4. A mold obtained by the method as claimed in any one of claims 1 to 3.

5. A method for producing a molded article, the method comprising:
producing a mold by the method as claimed in any one of claims 1 to 3;
molding a UV curable composition using the produced mold; and
obtaining a molded article comprising a cured product of the molded UV curable composition.

6. The method according to claim 5, wherein the molded article is a micromirror array.

7. A molded article produced by the method as claimed in claim 5 or 6.

8. A simulation device configured to simulate deformation associated with curing of a UV curable composition, by finite element analysis using:
[1] curing shrinkage of the UV curable composition; and
[2] deformation of a mold associated with the curing shrinkage.

9. An apparatus for producing a mold used for molding a UV curable composition, the apparatus being configured:
to simulate deformation associated with curing of the UV curable composition by finite element analysis using:
[1] curing shrinkage of the UV curable composition; and
[2] deformation of the mold associated with the curing shrinkage; and
to design and produce the mold in accordance with a result of the simulation.

10. An apparatus for producing a molded article, the apparatus being configured:
to simulate deformation associated with curing of a UV curable composition by finite element analysis using:
[1] curing shrinkage of the UV curable composition; and
[2] deformation of a mold associated with the curing shrinkage;
to design and produce a mold in accordance with a result of the simulation; and
to mold the UV curable composition using the produced mold.
